# EUROPEAN PATENT SPECIFICATION

(11) **EP 1 231 744 B1**
(45) Date of publication and mention of the grant of the patent: **12.10.2011**
(21) Application number: 02006638.7
(22) Date of filing: 19.05.2000
(51) Int. Cl.: H04W 28/10

(54) **Prioritization and flow control of a spread spectrum multiuser channel**
Priorisierung und Flusssteuerung von Datenpaketen für einen Spreizspektrummehrbenutzerkanal
Etablissement des priorités et régulation de flux dans un canal multi-utilisateurs à spectre étalé

(30) Priority: 20.05.1999 US 135073 P
(43) Date of publication of application: 14.08.2002
(62) Divisional of application: 00930830.5
(73) Proprietor: INTERDIGITAL TECHNOLOGY CORPORATION, Wilmington, DE 19810 (US)
(72) Inventor: Terry, Stephen E., North Post, NY 11768 (US)
(74) Representative: Badel, Xavier Claude Yves

(56) References cited:
- EP-A- 0 912 015
- US-A- 5 317 562
- YANG C -Q ET AL: "A TAXONOMY FOR CONGESTION CONTROL ALGORITHMS IN PACKET SWITCHING NETWORKS" IEEE NETWORK,IEEE INC. NEW YORK,US, vol. 9, no. 4, 1 July 1995 (1995-07-01), pages 34-45, XP000526590 ISSN: 0890-8044

## Description

### BACKGROUND

The invention generally relates to channels used by multiple users in a wireless code division multiple access spread spectrum system. More specifically, the invention relates to a system and method of prioritizing and controlling the flow of data for common and shared channels in a spread spectrum system.

WO 96/08935 shows such a method and system in TDMA system.

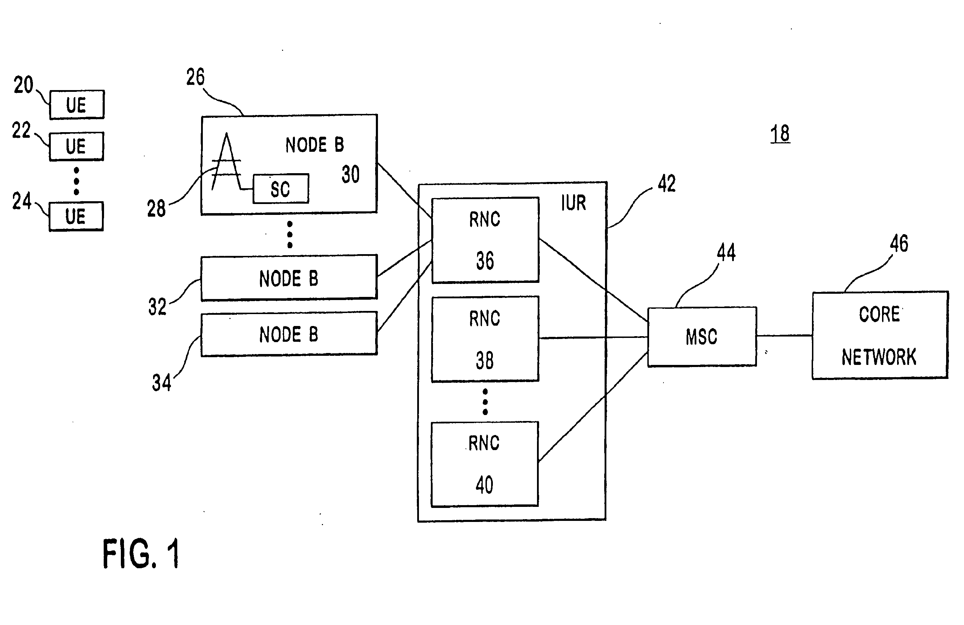

**Figure 1** illustrates a simplified wireless spread spectrum code division multiple access (CDMA) communication system **18**. A node b **26** within the system **18** communicates with associated user equipment **20-24** (UE). The node b **26** has a single site controller (SC) **30** associated with either a single (shown in **Figure 1**) or multiple base stations **28**. A Group of node bs **26, 32, 34** is connected to a radio network controller (RNC) **36**. To transfer communications between RNCs **36-40**, an interface between the RNCs (IUR) **42** is utilized. Each RNC **36-40** is connected to a mobile switching center (MSC) **44** which in turn is connected to the core network **46**.

To communicate within the system **18**, many types of communication channels are used, such as dedicated, shared and common. Dedicated channels transfer data between a node b **26** and a particular UE **20-24**. Common and shared channels are used by multiple UEs **20-24** or users. All of these channels carry a variety of data including traffic, control and signaling data.

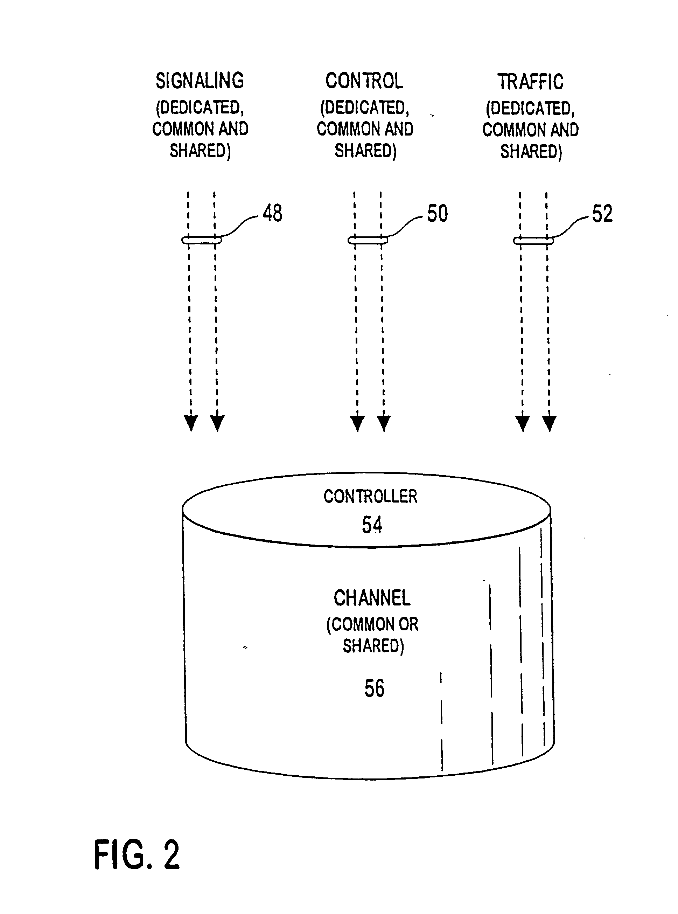

Since shared and common channels carry data for different users, data is sent using protocol data units (PDUs) or packets. As shown in **Figure 2****,** to regulate the flow of data from differing sources **48-52** into a channel **56**, a controller **54** is used.

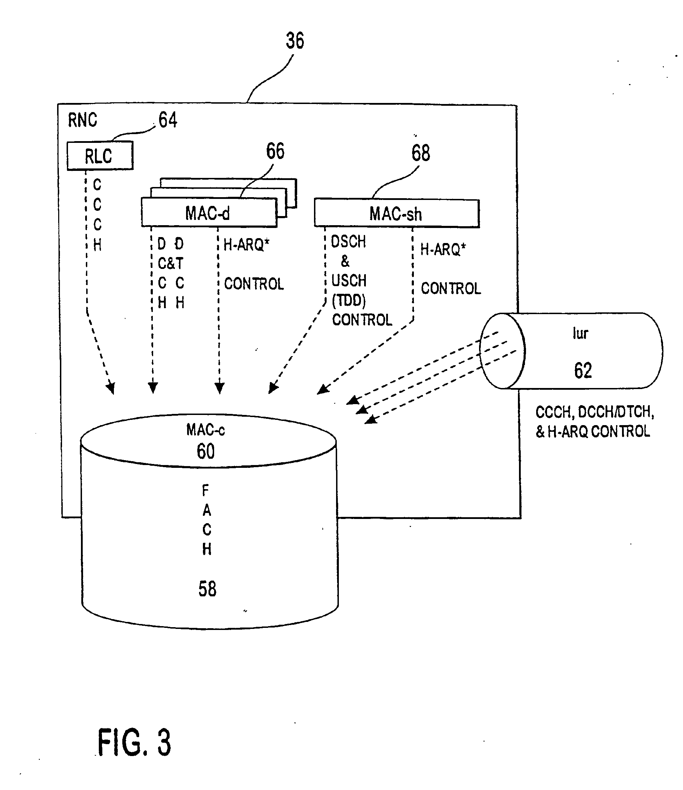

One common channel used for transmitting data to the UEs **20-24** is the forward access common channel (FACH) **58**. As shown in **Figure 3**, the FACH **58** originates in a RNC **36** and is sent to a node b **28-34** for wireless transmission as a spread spectrum signal to the UEs **20-24**. The FACH **58** carriers several data types from various sources, such as a common control channel (CCCH), dedicated control and traffic channel (DCCH and DTCH), and a downlink and uplink share channel (DSCH and USCH) control signaling. The FACH **58** also carries control signaling out of band, such as hybrid automatic repeat request (H-ARQ), and similar data transmitted via the IUR **62** from other RNCs **38-40**, such as CCCH, DCCH, DTCH and H-ARQ control data.

Various controllers are used by the RNC **36** to control the flow of data. A radio link controller (RLC) **64** handles the CCCH. The dedicated medium access controller (MAC-d) **66** handles the DCCH, the DTCH and some out of band H-ARQ signaling. The shared medium access controller (MAC-sh) **68** handles the DSCH, USCH control signaling and out of band H-ARQ control signaling. Controlling the FACH **58** is the common medium access controller (MAC-c) **60**.

Due to the multiple sources of data **48-52** that can be transmitted over a common or shared channel, the channel controllers **54** queue the data prior to transmission. If a large backlog develops in the queue, data in the queue develops a latency. A large latency of certain data such as control data will result in the failure of a channel. To alleviate this problem, the prior art either flushed the queue to reduce congestion or rerouted the data. Flushing the queue results in the loss of data and requires retransmission which is undesirable. Rerouting data already queued creates a duplication of data within the system and does not resolve the existing congestion. According, it is desirable to reduce the latency of data for shared and common channels without the problems associated with the prior art.

### SUMMARY

The invention provides a method and system as claimed in claims 1 and 9.

Packet data from a plurality of sources is received at a controller associated with the multiuser channel. Each packet of the packet data is prioritized based on in part the reroutability of a class of data types. Each packet is scheduled for transmission over the multiuser channel based on in part the prioritization. A backlog of packet data queued is tracked for transfer over the multiuser channel. Based on in part the tracked queue, the flow of data from each data source is limited.

### BRIEF DESCRIPTION OF THE DRAWINGS

**Figure 1** is a simplified illustration of a wireless spread spectrum communication system.

**Figure 2** is an illustration of data flowing into a common or shared channel.

**Figure 3** is an illustration of data flowing into a FACH channel within a RNC.

**Figure 4** is an illustration of a prioritization scheme.

**Figure 5** is a prioritization scheme for use with a FACH channel.

**Figure 6** depicts a reservation mechanism used with a common or shared channel.

**Figure 7** depicts data source windows used with a common or shared channel.

### DETAILED DESCRIPTION OF THE PREFERRED EMBODIMENTS

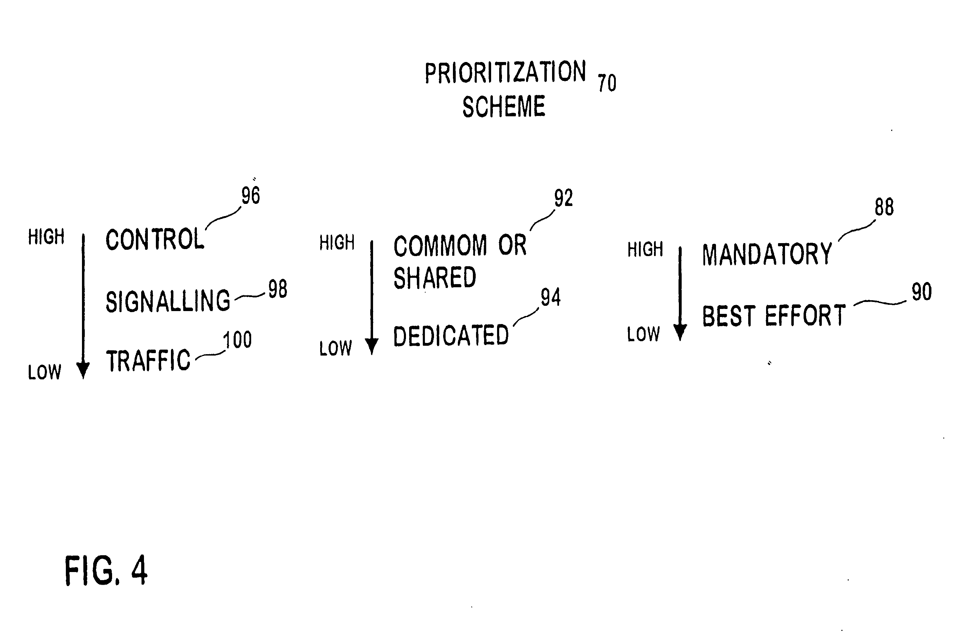

Data prioritization **70** is used to reduce data latency in a multiuser channel controller **54** as illustrated in **Figure 4**. For a particular common or shared channel, certain data must be transmitted on that channel and is shown in the figure as "mandatory" **88**. Other data is preferably sent on the particular channel but may be rerouted to another channel, such as a dedicated channel. This data is referred to as "best effort" **90**. Since "mandatory" data **88** is not reroutable, it takes priority over "best effort" data **90**.

The type of the data within a packet, such as control **96**, signaling **98** and traffic data **100**, is also used for prioritization. To accomplish prioritization of the data type, control **96** and signaling **98** data packets are separated from traffic data packets **100**. One approach to separating the packets is to group similar data type packets together prior to reception at the controller **54**. Alternately, packets sent by each channel prior to reception by the controller **54** are provided with a flag or identifier indicating the packets' data type.

Since a prolonged delay in the transfer of control **96** or signaling **98** data results in a frozen channel, control **96** and signaling **98** data are given a higher priority than traffic data **100**. Additionally, data associated with multiple users, common or shared **92**, has a higher priority than data for a single user, dedicated **94**. The data prioritization scheme is typically stored in the software of the multiuser channel's controller.

During periods of high congestion, data is rerouted to other channels based on its priority **70**. For instance, best effort dedicated traffic data is rerouted and mandatory common control data is not. By rerouting data prior to queuing, retransmissions will not be required. Accordingly, the amount of queued data is reduced resulting in lower data latency. Additionally, since the rerouted data is never queued, the duplication of data as experienced in the prior art is eliminated.

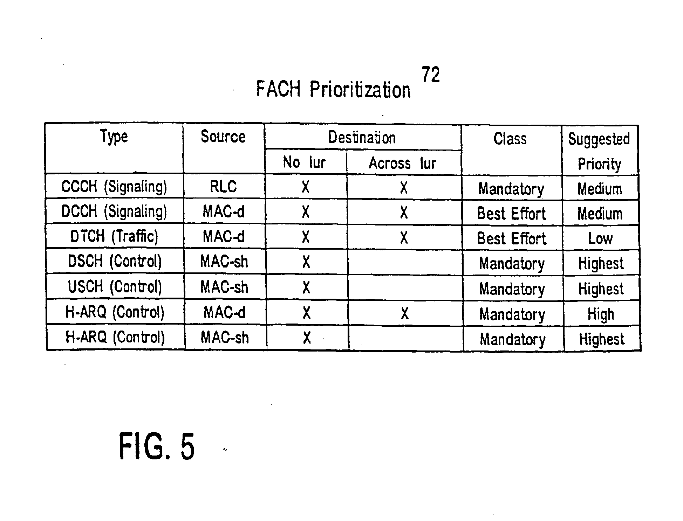

A prioritization scheme **72** for use with a FACH **58** is shown in **Figure 5**. Since the DSCH, H-ARQ of the MAC-sh have mandatory shared control data, they have the highest priority, highest. Although the H-ARQ of the MAC-d has mandatory control data, being dedicated it is assigned a slightly lower priority, high. The CCCH and DCCH are used for signaling and have the next level of priority, medium. The lowest level of priority is assigned to the DTCH because it has best effort dedicated traffic data.

To facilitate this prioritization scheme **72** for the FACH **58**, modifications to the RNC **36** are required. As shown in **Figure 3**, the prior art MAC-d **66** controls the DCCH, DTCH and MAC-d's H-ARQ. As shown in **Figure 5**, each of these sources has a different priority. Since this data is multiplexed prior to prioritization at the MAC-d **66**, the multiplexer of the MAC-d **66** is moved to the MAC-c **6**0 to allow prioritization at the MAC-c **60**. Alternatively, the MAC-d **66** may send the priority and class (mandatory or best effort), such as by a flag or identifier, of each packet of the multiplexed data for prioritization at the MAC-c **60**. The data controlled by the RLC **64** and the MAC-sh **68** have equal priority and accordingly, neither requires modification. Using the stored priority list, the data from the various sources is scheduled for transmission and rerouted during periods of high congestion.

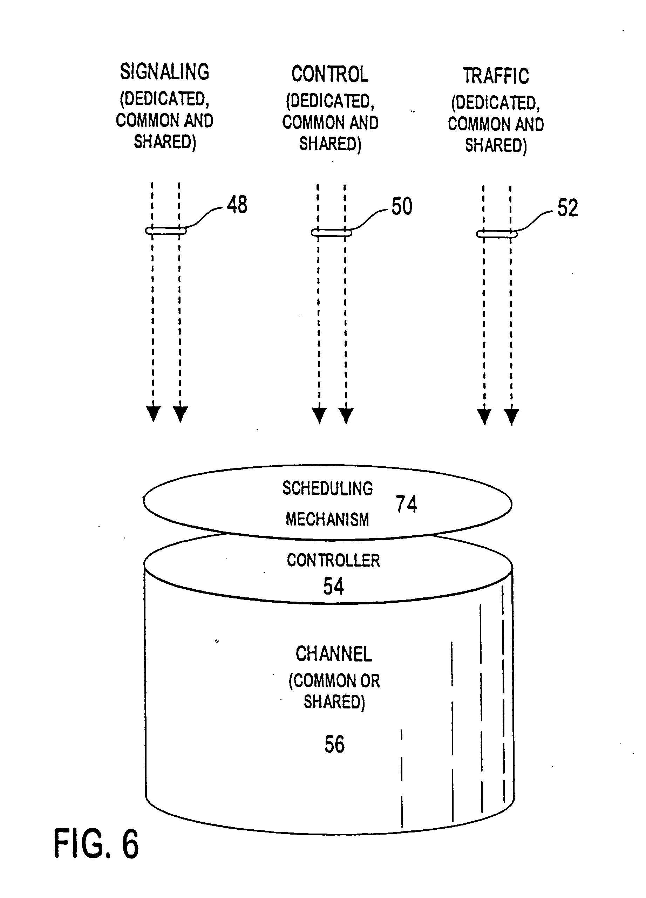

Another technique for reducing the latency of data which may be combined with prioritization is to control the flow of data between the various controllers. As shown in **Figure 6**, a scheduling mechanism **74** is used to regulate the data entering the common or shared channel **56**. The scheduling mechanism **74** tracks the backlog of data in the controller's queue. If the mechanism **74** recognizes congestion and that the data will not be transmitted in a certain period of time, access to the channel **56** limits the flow of data from the individual data sources. The individual sources will recognize the need to reroute data or to not attempt transmission. Using a flow control mechanism with a FACH, MAC and RLC (Layer 2), the latency of signaling is decreased thus increasing efficiency.

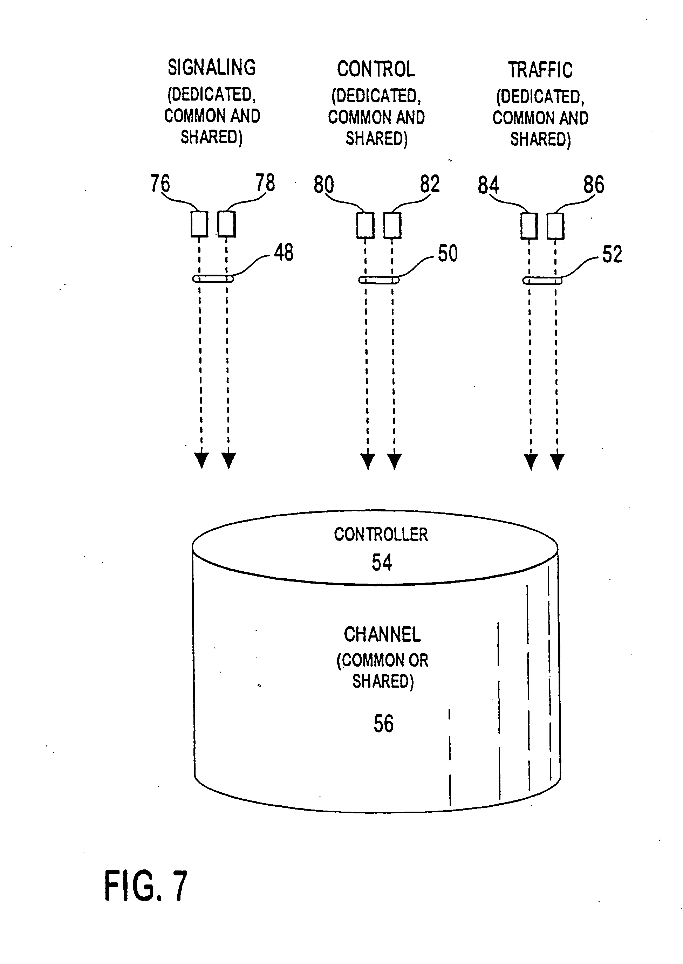

To prevent the monopolization of the common or shared channel **56** by one data source **48-52** variable windows **76-86** may be used as shown in **Figure 7**. Each data source **48-52** has a window or multiple windows **76-86** of outstanding data in the queue that it is permitted. The size of the window **76** is based on the requirements of the specific source. The window **76** is dynamically adjusted in response to the availability of the queue. As the availability of the channel increases, the size of the windows increases which increases the number of outstanding packets. Conversely, as the availability decreases, the size of the windows decreases which decreases the number of outstanding packets. As a result of the decreased windows, the data sources either reroute or stop sending packets to the windows.

## Claims

1. A method of controlling packet data from multiple types of data sources, including data sources having reroutable data and data sources having non-reroutable data, said packet data flowing into a multiuser channel (56) in a wireless spread spectrum code division multiple access communication system, the method comprising: providing a queue (54, 76-86) for incoming data of each data source; tracking a backlog of data in the queue (54, 76-86); and limiting data flow from each of the data sources based on in part the tracked backlog; the method further comprising:
selectively rerouting reroutable packet data intended to be transmitted over the multiuser channel (56) to another channel based on in part the tracked backlog.

2. The method of claim 1 wherein the queue (54, 76-86) is a single queue (54) associated with the multiuser channel (56).

3. The method of claim 1 wherein the queue (54, 76-86) comprises a plurality of queues (76-86), the plurality of queues (76-86) comprising a queue (76-86) per each data source and a queue (76-86) for the multiuser channel (56).

4. The method of claim 3 wherein the data flow limiting is by changing a size of each data source queue (76-86) in response to the tracked backlog.

5. The method of claim 4 wherein the size of each data source queue (76-86) decreases as the tracked backlog increases and increases as the tracked backlog decreases.

6. The method of claim 1 wherein the multiuser channel (56) is a shared channel.

7. The method of claim 1 wherein the multiuser channel (56) is a common channel.

8. The method of claim 7 wherein the common channel (56) is a forward access control channel (58).

9. A radio network controller (36-40) controlling the communication of a plurality of communication nodes (30, 32, 34) where each node (30, 32, 34) supports wireless spread spectrum communications for a plurality of user equipments (20, 22, 24) having means for receiving packet data transferred over a multiuser channel, the radio network controller (36, 38, 40) having: a queue (54, 76-80) for incoming data from each one of multiple types of data sources, including data sources having reroutable data and data sources having non-reroutable data; means for tracking a backlog of packet data in the queue (54, 76-80); the radio network controlle, RNC, (36, 38, 40) comprising:
means (54) for limiting data flow from each of the data sources based on in part the tracked backlog;
means for selectively rerouting reroutable packet data intended to be transmitted over the multiuser channel to another channel based on in part the tracked backlog.

10. The RNC of claim 9 wherein the queue (54, 76-86) is a single queue (54) associated with the multiuser channel (56).

11. The RNC of claim 9 wherein the queue (54, 76-86) comprises a plurality of queues (54, 76-86), the plurality of queues (54, 76-86) comprising a queue (76-86) per each data source and a queue (54) for the multiuser channel (56).

12. The RNC of claim 11 wherein the limiting means (54) limits by changing a size of each data source queue (76-86) in response to the tracked backlog.

13. The RNC of claim 12 wherein the size of each data source queue (76-86) decreases as the tracked backlog increases and increases as the tracked backlog decreases

## Patentansprüche

1. Verfahren zum Steuern von Paketdaten von mehreren Arten von Datenquellen, einschließlich Datenquellen mit umleitungsfähigen Daten und Datenquellen mit nicht-umleitungsfähigen Daten, wobei die Paketdaten in einen Mehrnutzerkanal (56) in einem Drahtloskommunikationssystem mit Spreizspektrum und Code Division Multiple Access hinein fließen, wobei das Verfahren Folgendes umfasst: Bereitstellen einer Warteschlange (54, 76-86) für ankommende Daten jeder Datenquelle; Verfolgen eines noch abzuarbeitenden Bestandes an Daten in der Warteschlange (54, 76-86); und Begrenzen des Datenflusses von jeder der Datenquellen zum Teil auf der Grundlage des verfolgten, noch abzuarbeitenden Bestandes; wobei das Verfahren des Weiteren Folgendes umfasst:
selektives Umleiten umleitungsfähiger Paketdaten, die dafür vorgesehen sind, über den Mehrnutzerkanal (56) gesendet zu werden, zu einem anderen Kanal zum Teil auf der Grundlage des verfolgten, noch abzuarbeitenden Bestandes.

2. Verfahren nach Anspruch 1, wobei die Warteschlange (54, 76-86) eine einzelne Warteschlange (54) ist, die dem Mehrnutzerkanal (56) zugeordnet ist.

3. Verfahren nach Anspruch 1, wobei die Warteschlange (54, 76-86) mehrere Warteschlangen (76-86) umfasst, wobei die mehreren Warteschlangen (76-86) eine Warteschlange (76-86) pro Datenquelle und eine Warteschlange (76-86) für den Mehrnutzerkanal (56) umfassen.

4. Verfahren nach Anspruch 3, wobei das Begrenzen des Datenflusses durch Ändern einer Größe jeder Datenquellenwarteschlange (76-86) in Reaktion auf den verfolgten, noch abzuarbeitenden Bestand erfolgt.

5. Verfahren nach Anspruch 4, wobei die Datenquellenwarteschlange (76-86) in dem Maße kleiner wird, wie der verfolgte, noch abzuarbeitende Bestand größer wird, und größer wird, wie der verfolgte, noch abzuarbeitende Bestand kleiner wird.

6. Verfahren nach Anspruch 1, wobei der Mehrnutzerkanal (56) ein gemeinsam genutzter Kanal ist.

7. Verfahren nach Anspruch 1, wobei der Mehrnutzerkanal (56) ein gemeinsamer Kanal ist.

8. Verfahren nach Anspruch 7, wobei der gemeinsame Kanal (56) ein Forward Access Control-Kanal (58) ist.

9. Funknetz-Controller (36-40), der die Kommunikation mehrerer Kommunikationsknoten (30, 32, 34) steuert, wobei jeder Knoten (30, 32, 34) eine Spreizspektrum-Drahtloskommunikation für mehrere Nutzergeräte (20, 22, 24) unterstützt, die ein Mittel zum Empfangen von Paketdaten aufweisen, die über einen Mehrnutzerkanal übertragen werden, wobei der Funknetz-Controller (36, 38, 40) Folgendes aufweist: eine Warteschlange (54, 76-80) für ankommende Daten von jeder von mehreren Arten von Datenquellen, einschließlich Datenquellen mit umleitungsfähigen Daten und Datenquellen mit nicht-umleitungsfähigen Daten, ein Mittel zum Verfolgen eines noch abzuarbeitenden Bestandes von Paketdaten in der Warteschlange (54, 76-80); wobei der Funknetz-Controller (RNC) (36,38,40) Folgendes umfasst:
ein Mittel (54) zum Begrenzen des Datenflusses von jeder der Datenquellen zum Teil auf der Grundlage des verfolgten, noch abzuarbeitenden Bestandes;
ein Mittel zum selektiven Umleiten umleitungsfähiger Paketdaten, die dafür vorgesehen sind, über den Mehrnutzerkanal gesendet zu werden, zu einem anderen Kanal zum Teil auf der Grundlage des verfolgten, noch abzuarbeitenden Bestandes.

10. RNC nach Anspruch 9, wobei die Warteschlange (54, 76-86) eine einzelne Warteschlange (54) ist, die dem Mehrnutzerkanal (56) zugeordnet ist.

11. RNC nach Anspruch 9, wobei die Warteschlange (54, 76-86) mehrere Warteschlangen (54, 76-86) umfasst, wobei die mehreren Warteschlangen (54, 76-86) eine Warteschlange (76-86) pro Datenquelle und eine Warteschlange (54) für den Mehrnutzerkanal (56) umfassen.

12. RNC nach Anspruch 11, wobei das Begrenzungsmittel (54) durch Ändern einer Größe jeder Datenquellenwarteschlange (76-86) in Reaktion auf den verfolgten, noch abzuarbeitenden Bestand begrenzt.

13. RNC nach Anspruch 12, wobei die Datenquellenwarteschlange (76-86) in dem Maße kleiner wird, wie der verfolgte, noch abzuarbeitende Bestand größer wird, und größer wird, wie der verfolgte, noch abzuarbeitende Bestand kleiner wird.

## Revendications

1. Procédé de régulation de données par paquets de multiples types de sources de données, comprenant des sources de données ayant des données pouvant être réacheminées et des sources de données ayant des données ne pouvant pas être réacheminées, lesdites données par paquets s'écoulant dans un canal multiutilisateurs (56) dans un système de communication à accès multiples par répartition de code à spectre étalé sans fil, le procédé comprenant : la fourniture d'une file d'attente (54, 76-86) pour les données entrantes de chaque source de données ; le suivi d'une attente de données dans la file d'attente (54, 76-86) ; et la limitation du flux de données de chacune des sources de données sur la base en partie de l'attente suivie ;
le procédé comprenant en outre :
le réacheminement sélectif des données par paquets pouvant être réacheminées qui sont destinées à être transmises sur le canal multiutilisateurs (56) vers un autre canal sur la base en partie de l'attente suivie.

2. Procédé selon la revendication 1, dans lequel la file d'attente (54, 76-86) est une file d'attente unique (54) associée au canal multiutilisateurs (56).

3. Procédé selon la revendication 1, dans lequel la file d'attente (54, 76-86) comprend une pluralité de files d'attente (76-86), la pluralité de files d'attente (76-86) comprenant une file d'attente (76-86) pour chaque source de données et une file d'attente (76-86) pour le canal multiutilisateurs (56).

4. Procédé selon la revendication 3, dans lequel la limitation de flux de données s'effectue en changeant une taille de chaque file d'attente de source de données (76-86) en réponse à l'attente suivie.

5. Procédé selon la revendication 4, dans lequel la taille de chaque file d'attente de source de données (76-86) diminue lorsque l'attente suivie augmente et augmente lorsque l'attente suivie diminue.

6. Procédé selon la revendication 1, dans lequel le canal multiutilisateurs (56) est un canal partagé.

7. Procédé selon la revendication 1, dans lequel le canal multiutilisateurs (56) est un canal commun.

8. Procédé selon la revendication 7, dans lequel le canal commun (56) est un canal de régulation d'accès direct (58).

9. Contrôleur de réseau radio (36-40) régulant la communication d'une pluralité de noeuds de réseau (30, 32, 34) où chaque noeud (30, 32, 34) prend en charge une communication de spectre étalé sans fil pour une pluralité d'équipements d'utilisateurs (20, 22, 24) ayant un moyen pour recevoir des données par paquets transférées sur un canal multiutilisateurs, le contrôleur de réseau radio (36, 38, 40) ayant : une file d'attente (54, 76-80) pour des données entrantes de chacun de multiples types de sources de données, comprenant des sources de données ayant des données pouvant être réacheminées et des sources de données ayant des données ne pouvant pas être réacheminées ; un moyen pour effectuer le suivi d'une attente de données par paquets dans la file d'attente (54, 76-80) ; le contrôleur de réseau radio (36, 38, 40) comprenant :
un moyen (54) pour effectuer la limitation du flux de données de chacune des sources de données sur la base en partie de l'attente suivie ;
un moyen pour effectuer le réacheminement sélectif des données par paquets pouvant être réacheminées qui sont destinées à être transmises sur le canal multiutilisateurs vers un autre canal sur la base en partie de l'attente suivie.

10. Contrôleur de réseau radio selon la revendication 9, dans lequel la file d'attente (54, 76-86) est une file d'attente unique (54) associée au canal multiutilisateurs (56).

11. Contrôleur de réseau radio selon la revendication 9, dans lequel la file d'attente (54, 76-86) comprend une pluralité de files d'attente (54, 76-86), la pluralité de files d'attente (54, 76-86) comprenant une file d'attente (76-86) pour chaque source de données et une file d'attente (54) pour le canal multiutilisateurs (56).

12. Contrôleur de réseau radio selon la revendication 11, dans lequel le moyen de limitation (54) effectue la limitation en changeant une taille de chaque file d'attente de source de données (76-86) en réponse à l'attente suivie.

13. Contrôleur de réseau radio selon la revendication 12, dans lequel la taille de chaque file d'attente de source de données (76-86) diminue lorsque l'attente suivie augmente et augmente lorsque l'attente suivie diminue.
